# EUROPÄISCHE PATENTSCHRIFT

(11) **EP 0 774 322 B1**
(45) Veröffentlichungstag und Bekanntmachung des Hinweises auf die Patenterteilung: **07.07.1999**
(21) Anmeldenummer: 96116488.6
(22) Anmeldetag: 15.10.1996
(51) Int. Cl.: B23Q 16/00, B25B 5/06, B23Q 3/18

(54) **Verfahren zum Vorbereiten eines Werkstücks, insbesondere Bremssattels, zur Weiterbearbeitung, sowie Spannvorrichtung zum Durchführen des Verfahrens**
Method of preparing a workpiece, in particular a brake calliper, for further treatment, as well as clamping device for carrying out the method
Procédé de préparation d'une pièce, en particulier un étrier, pour son traitement ultérieur et dispositif de serrage pour la mise en oeuvre du procédé

(30) Priorität: 14.11.1995 DE 19542425
(43) Veröffentlichungstag der Anmeldung: 21.05.1997
(73) Patentinhaber: LUCAS INDUSTRIES PUBLIC LIMITED COMPANY, Solihull, West Midlands B91 3TX (GB)
(72) Erfinder: Preker, Gerd, 56075 Koblenz (DE); Thieroff, Hans Joachim, 56235 Ransbach-Baumbach (DE); Willmes, Thomas, 56179 Niederwerth (DE); Dilla, Christian, 56191 Weitersburg (DE)
(74) Vertreter: Goetz, Rupert, Dipl.-Ing.

(56) Entgegenhaltungen:
- EP-A- 0 519 879
- DE-A- 4 202 989
- US-A- 4 203 582

## Beschreibung

Die Erfindung betrifft ein Verfahren nach dem Oberbegriff des Anspruchs 1 und eine Spannvorrichtung nach dem Oberbegriff des Anspruchs 6.

Werkstücke, die zumindest einen zylindrischen Abschnitt aufweisen, lassen sich für Bearbeitungs- und Meßvorgänge auf einfache Weise zentrieren und spannen indem sie mit ihrem zylindrischen Abschnitt auf ein Paar konvergierende Stützflächen einer Spannvorrichtung aufgelegt und von einer Spannpratze mit einem entsprechenden Paar konvergierender Spannflächen festgespannt werden (Prospekt der Firma MWT, Maschinen- und Werkzeugtechnik GmbH, Neuenstadt/Heilbronn, Vorrichtungsbaukasten im Rasterspannsystem sowie Prospekt der Firma Horst Witte Gerätebau, Bleckede, Witte-Alufix). Diese bekannte Vorgehensweise und die dazu verwendeten Spannvorrichtungen, auf die sich die Ansprüche 1 und 6 mit ihrem Oberbegriff beziehen, sind jedoch nicht auf Werkstücke anwendbar, bei denen eine zum Zentrieren geeignete zylindrische Oberfläche entweder nicht vorhanden oder zu kurz oder für Auflage- und Spannprismen nicht zugänglich ist. Dies gilt besonders für Schwimmsättel und andere gehäuseartige Bauteile von Scheibenbremsen, die üblicherweise als Rohlinge durch Gießen oder Gesenkschmieden erzeugt werden und dann spanend bearbeitet werden müssen. Beispielsweise werden Schwimmsättel für Scheibenbremsen in Kokillen einstückig mit einem Bremszylinder gegossen; an diesem sind jedoch Versteifungs- und Kühlrippen derart angeordnet, daß er sich nicht in eine einfache, mit Spannprismen ausgestattete Spannvorrichtung einlegen läßt. Selbst wenn aber ausreichend große Mantelflächenabschnitte eines solchen Bremszylinders zugänglich sind, bedeutet dies nicht unbedingt, daß sie sich für eine definierte Einspannung eignen. In Kokillen oder Gesenken läßt sich zwar eine große Zahl, gelegentlich über eine Million, Werkstücke in an sich befriedigender Qualität gießen bzw. schmieden; dabei muß aber im allgemeinen hingenommen werden, daß infolge Verschleißes bestimmter Wandabschnitte der Kokillen oder Gesenke mehr oder weniger große Oberflächenbereiche der hergestellten Guß- oder Schmiedeteile ihre Form und Abmessungen allmählich verändern. Selbst wenn bestimmte Oberflächenbereiche von solchen Änderungen nicht oder nur in unerheblichem Maß betroffen sind, lassen sich solche Bereiche nach bekannten Verfahren und mit bekannten Spannvorrichtungen oft nicht für eine befriedigend genaue Einspannung von Werkstücken nutzen.

Es ist auch bekannt (DE 42 02 989 A1), Werkstücke dadurch zu spannen, daß man in eine beispielsweise senkrechte Fläche jedes Werkstücks zwei konische Zentrieröffnungen in einem Abstand voneinander einarbeitet und Spannelemente mit je einer an ihnen ausgebildeten sphärischen Spannfläche in je eine der Zentrieröffnungen eingreifen läßt und das Werkstück gegen ebene Stützflächen drückt. Mit einer solchen Anordnung läßt sich das Werkstück jedoch nur dann eindeutig in einer vorgegebenen Lage spannen, wenn der Abstand zwischen den in das Werkstück eingearbeiteten konischen Zentrieröffnungen genau mit dem Abstand zwischen den sphärischen Spannflächen der Spannelemente übereinstimmt. Diese Voraussetzung läßt sich oft von vorneherein nicht erfüllen oder sie geht infolge von Wärmedehnungen verloren.

Abstandsungenauigkeiten zwischen einander paarweise zugeordneten Zentrier- und Spannelementen lassen sich in ebenfalls bekannter Weise (DE 37 29 601 C1) dadurch kompensieren, daß man in einem vorbestimmten Abstand voneinander angeordnete Spannelemente, die je einen konischen Stift aufweisen, nicht unmittelbar an einem zu spannenden Werkstück angreifen läßt sondern an einem Werkstückträger, der in einem dem gegenseitigen Abstand der Spannelemente entsprechenden Abstand voneinander zwei Zentrierbalken aufweist. Jeder der beiden Zentrierbalken ist mit seinen beiden Enden am Werkstückträger befestigt und weist in einem mittleren Bereich eine Zentrierhülse auf. Einer der beiden Zentrierbalken ist starr, so daß die an ihm angeordnete Zentrierhülse zusammen mit dem ihr zugeordneten Spannelement einen Fixpunkt für die Anordnung des Werkzeugträgers ergibt. Der andere Zentrierbalken ist hingegen quer zu seiner Längsrichtung biegsam, so daß die in seinem mittleren Bereich angeordnete Zentrierhülse ihren Abstand von der Zentrierhülse des starren Zentrierbalkens verändern kann, um sich dem gegenseiten Abstand der Spannelemente anzupassen. In seiner Längsrichtung ist hingegen auch der elastisch biegsame Zentrierbalken starr, so daß der Werkstückträger daran gehindert ist, sich um die Zentrierhülse des starren Zentrierbalkens zu drehen. Dadurch ergibt sich eine eindeutige Zuordnung zwischen den Spannelementen und dem Werkstückträger. Ein auf dem Werkstückträger festgespanntes Werkstück kann somit zusammen mit dem Werkstückträger mehrere Bearbeitungsstationen durchlaufen, die je ein Paar Spannelemente zum lagegenauen Spannen des Werkstückträgers aufweisen. Ungelöst bleibt aber das Problem, Werkstücke im Rohzustand in einer vorbestimmten Lage auf dem Werkstückträger festzuspannen.

Der Erfindung liegt deshalb die Aufgabe zugrunde, eine definierte und im wesentlichen gleichbleibend genaue Aufspannung von komplizierten Werkstücken im Rohzustand, insbesondere von gegossenen oder geschmiedeten Bremssätteln, zu erleichtern.

Die Aufgabe ist verfahrenstechnisch mit den Merkmalen des Anspruchs 1 und vorrichtungstechnisch mit den Merkmalen des Anspruchs 6 gelöst. Vorteilhafte Weiterbildungen ergeben sich aus den Unteransprüchen.

Ausführungsbeispiele der Erfindung werden im folgenden anhand schematischer Zeichungen mit weiteren Einzelheiten erläutert.
Es zeigen:
- Fig.1: die Draufsicht einer erfindungsgemäßen Spannvorrichtung mit aufgespanntem Werkstück,
- Fig.2: den Schnitt in der senkrechten Längsmittelebene II-II in Fig.1,
- Fig.3: den Schnitt in der senkrechten Querebene III-III in Fig.1,
- Fig.4: einen vergrößerten Ausschnitt aus Fig.3,
- Fig.5: den weiter vergrößerten Ausschnitt V aus Fig.4,
- Fig.6: einen der Fig.3 entsprechenden Schnitt einer abgewandelten erfindungsgemäßen Spannvorrichtung und
- Fig.7: die Draufsicht einer gegenüber Fig.1 abgewandelten erfindungsgemäßen Spannvorrichtung.

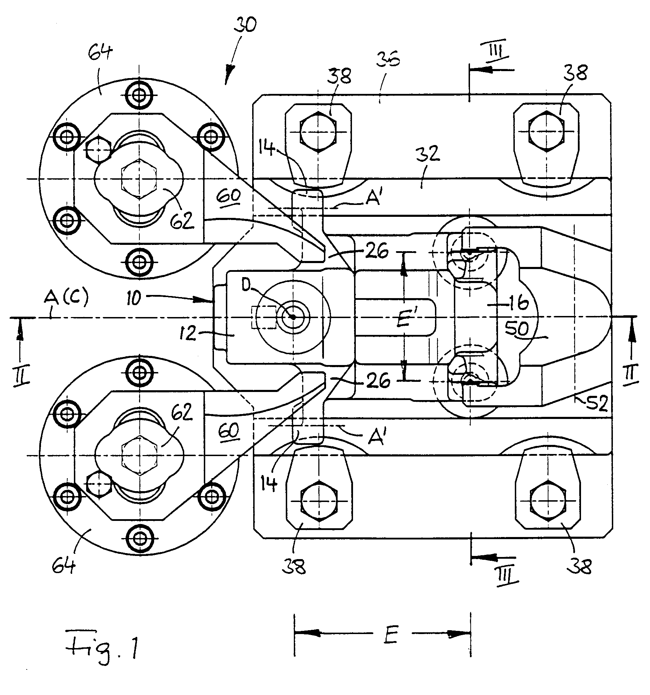

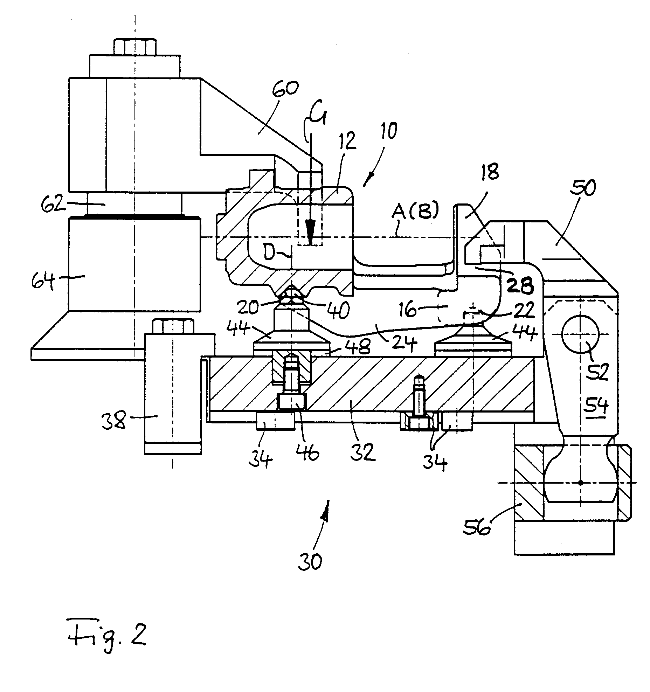

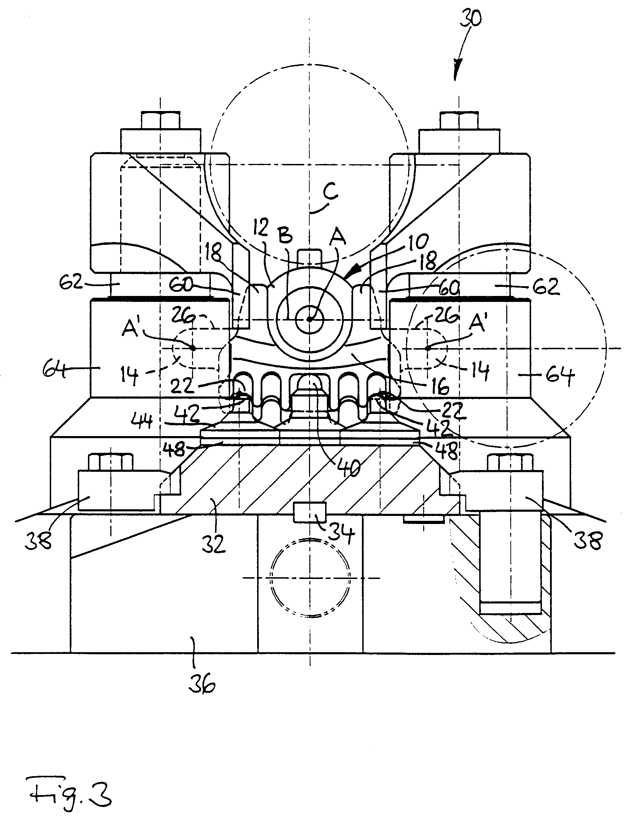

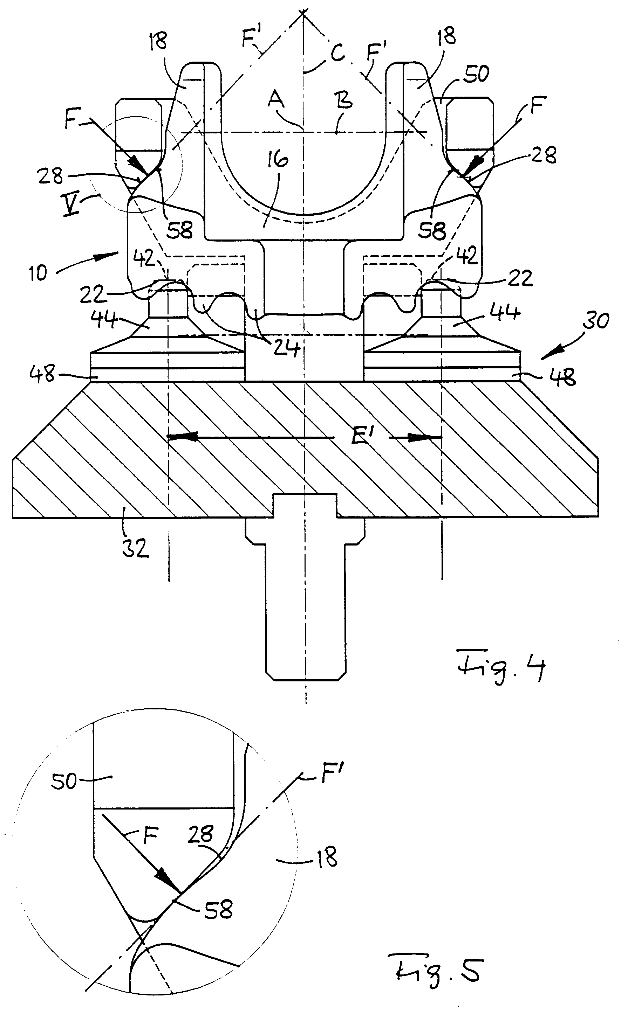

In Fig.1 bis 5 ist als Beispiel eines Werkstücks 10 ein Schwimmsattel für eine Scheibenbremse dargestellt, der wie üblich u.a. einen Zylinder 12 mit einem Paar seitlicher Ansätze 14 sowie ein Gabelteil 16 mit einem Paar Finger 18 aufweist. Dieses Werkstück 10 ist beispielsweise aus Aluminium gegossen und muß an mehreren Stellen spangebend bearbeitet werden; insbesondere wird der Zylinder 12 längs seiner Achse A ausgebohrt, und die beiden Ansätze 14 werden beidseitig, in Fig.1 links und rechts, plangefräst und erhalten je eine Bohrung mit zur Achse A paralleler Achse A'. Für die folgende Erläuterung wird die zur gemeinsamen Ebene der beiden Achsen A' parallele, die Achse A enthaltende Ebene als Basisebene B bezeichnet, und die dazu normale, die Achse A enthaltende Mittelebene als Bezugsebene C.

Das dargestellte Werkstück 10 hat im Vergleich mit üblichen Schwimmsätteln für Scheibenbremsen die Besonderheit, daß in den Zylinder 12 seitlich eine kegelfömig vertiefte erste Auflagefläche 20 eingegossen ist, deren im folgenden als Drehachse D bezeichnete geometrische Achse senkrecht zur Basisebene B angeordnet ist und in der Bezugsebene C liegt. In einem Abstand E von der hohlkegelförmigen ersten Auflagefläche 20 und im Abstand E' voneinander, ungefähr an der Basis je eines der beiden Finger 18, sind am Gabelteil 16 zwei ebene zweite Auflageflächen 22 ausgebildet. Die Auflageflächen 20 und 22 sind in Zwischenräumen zwischen Rippen 24 angeordnet, die sich parallel zur Achse A des Zylinders 12 erstrecken und im Betrieb die Aufgabe haben, den Bremssattel zu versteifen und vor allem den Zylinder 12 kühl zu halten.

Den Auflageflächen 20 und 22 gegenüber, gemäß Fig.2 bis 5 oben, sind am Werkstück 10 erste und zweite Angriffsflächen 26 bzw. 28 ausgebildet. Die ersten Angriffsflächen 26 sind in der Nähe der Drehachse D angeordnet, beispielsweise von gemäß Fig.2 bis 4 oberen Begrenzungsflächen der seitlichen Ansätze 14 gebildet, und liegen in geringem Abstand von der Basisebene B in einer zu dieser parallelen, gemeinsamen Ebene. Die zweiten Angriffsflächen 28 sind hingegen in einem mit dem Abstand E ungefähr übereinstimmenden Abstand von der Drehachse D am Gabelteil 16 ausgebildet, und zwar bei dem Ausführungsbeispiel gemäß Fig.1 bis 5 an der Außenseite je eines der beiden Finger 18. Die beiden zweiten Angriffsflächen 28 sind dazu vorgesehen, mit je einer Spannkraft F belastet zu werden, deren Richtung die Bezugsebene C unter einem Winkel von ungefähr 45° schneidet und sich somit auch unter einem Winkel von ungefähr 45° zur Basisebene B erstreckt.

Zum Aufspannen eines Werkstücks 10 für Bearbeitungsvorgänge der beschriebenen Art und/oder für ein Vermessen des Werkstücks ist eine Spannvorrichtung 30 vorgesehen. Diese hat ein plattenförmiges Unterteil 32, das in Nuten an seiner Unterseite geführte Gleitsteine 34 aufweist, mit denen es auf einem beispielsweise zu einem Bohr- und Fräswerk gehörenden Maschinentisch 36 justierbar ist, um anschließend mittels Klemmkörpern 38 am Maschinentisch befestigt zu werden. Durch das Unterteil 32 ist die Anordnung dreier Stützflächen festgelegt, nämlich einer kugelförmigen oder kugelkalottenförmigen ersten Stützfläche 40 und zweier ebener oder ebenfalls kugelkalottenförmiger zweiter Stützflächen 42. Jede der Stützflächen 40 und 42 ist an einem von drei Einsätzen 44 ausgebildet, die in je einer Bohrung des Unterteils 32 stecken und mittels je einer Schraube 46 auswechselbar befestigt sind. Das Unterteil 32 kann mehr als drei solche Bohrungen aufweisen, damit die Möglichkeit besteht, die drei Einsätze 44 für Werkstücke 10 unterschiedlicher Größe in unterschiedlichen Abständen voneinander anzuordnen.

In jedem Fall bilden die drei Einsätze 44 die Ecken eines vorzugsweise gleichschenkligen Dreiecks, wobei die kugel- oder kugelkalottenförmige erste Stützfläche 40 von der Verbindungslinie der beiden zweiten Stützflächen 42 den verhältnismäßig großen Abstand E hat und die beiden zweiten Stützflächen 42 im Abstand E' voneinander angeordnet sind, der etwas kleiner sein kann als der Abstand E. Die drei Stützflächen 40 und 42 können in einer gemeinsamen, zur Basisebene B parallelen, in der dargestellten Normallage der Spannvorrichtung waagerechten Ebene liegen bzw. diese tangieren; im dargestellten Beispiel ist jedoch die kugelförmige erste Stützfläche 40 etwas höher angeordnet als die in einer gemeinsamen waagerechten Ebene angeordneten beiden zweiten Stützflächen 42. Die Höhe der ersten und zweiten Stützflächen 40 und 42 läßt sich mit planparallel geschliffenen Beilagscheiben 48 an die aufzuspannenden Werkstücke 10 anpassen.

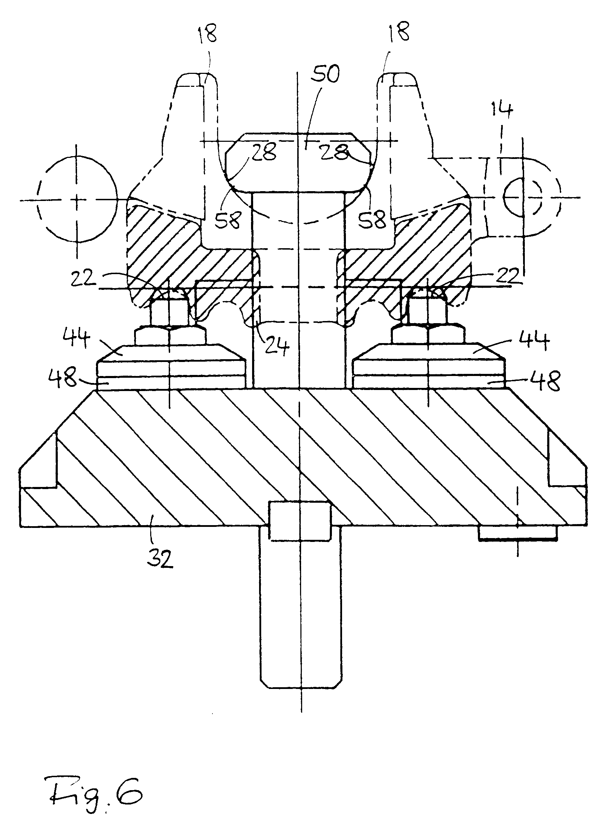

Zum Aufbringen der Spannkräfte F ist eine Spannpratze 50 vorgesehen, die um einen zur Bezugsebene C normalen Lagerbolzen 52 schwenkbar am Unterteil 32 gelagert ist und einen nach unten ragenden Fortsatz 54 aufweist, der gelenkig mit einem Schwenkantrieb 56, beispielsweise einer hydraulischen Kolbenzylindereinheit, verbunden ist. An der Spannpratze 50 sind zwei konvergierende Spannflächen 58 ausgebildet, die bei der in Fig.1 bis 5 dargestellten, gabelförmigen Gestaltung der Spannpratze 50 einander zugewandt sind. In der abgebildeten Betriebsstellung, in der ein Werkstück 10 festgespannt ist, liegen die beiden Spannflächen 58 in je einer zur Richtung der zugehörigen Spannkraft F normalen Ebene F', und diese Ebenen F' konvergieren derart, daß sie einander in der Bezugsebene C schneiden. Die zweiten Angriffsflächen 28 sind an die schräge Anordnung der jeweils zugehörigen Spannfläche 58 angepaßt und können, wie besonders aus Fig.5 ersichtlich ist, leicht konvex gewölbt sein; in diesem Fall werden sie von je einer der beiden konvergierenden Ebenen F' tangiert.

Damit das Werkstück 10 auch im Bereich seiner hohlkegelförmigen ersten Auflagefläche 20 sicher festgehalten wird, sind gemäß Fig.1 bis 3 der Spannpratze 50 gegenüberliegend zusätzlich zwei Spannarme 60 vorgesehen, die über je einen Zuganker 62 mit je einem Antrieb 64, z.B. einer hydraulischen Kolbenzylindereinheit, verbunden sind. Die beiden Spannarme 60 sind dazu vorgesehen, auf je eine der ersten Angriffsflächen 26 des Werkstücks 10 eine zusätzliche Spannkraft G senkrecht nach unten auszuüben. Jeder der beiden Spannarme 60 läßt sich um seinen Zuganker 62 derart aus der abgebildeten Betriebsstellung seitlich nach außen schwenken, daß das Werkstück 10 nach seiner Bearbeitung unbehindert herausgenommen und durch ein rohes Werkstück ersetzt werden kann.

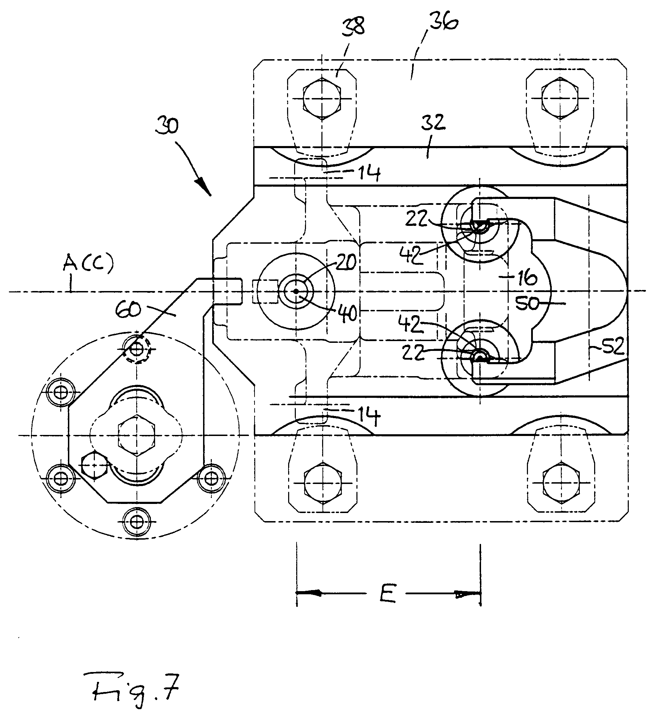

In Fig.6 ist eine abgewandelte Spannvorrichtung 30 dargestellt, die sich von der in Fig.1 bis 5 abgebildeten dadurch unterscheidet, daß die Spannpratze 50 nicht gabelfömig sondern ungeteilt ausgebildet ist und in den Zwischenraum zwischen den beiden Fingern 18 am Gabelteil 16 des Werkstücks 10 eingreift. Dementsprechend sind die konvergierenden zweiten Angriffsflächen 28 des Werkstücks 10 einander zugewandt, während die konvergierenden Spannflächen 58 der Spannpratze 50 gemäß Fig.6 voneinander abgewandt sind.

Gemäß Fig.7 genügt es, wenn die Spannvorrichtung 30 zusätzlich zur Spannpratze 50 nur einen einzigen Spannarm 60 aufweist, sofern dieser so angeordnet ist, daß die Wirkungslinie der von ihm auf das Werkstück 10 ausgeübten zusätzlichen Spannkraft G mindestens annähernd in der Bezugsebene C liegt.

Für alle dargestellten Ausführungsformen der Spannvorrichtung 30 gilt, daß in nach außen geschwenkter Stellung der Spannpratze 50 und Spannarme 60 ein Werkstück 10 mit seiner hohlkegelförmigen ersten Auflagefläche 20 auf die kugelförmige erste Stützfläche 40 aufgelegt und dadurch in bezug auf die Drehachse D zentriert wird. Gleichzeitig werden die zweiten Auflageflächen 22 des Werkstücks 10 auf die zweiten Stützflächen 42 aufgelegt, ohne daß es dort auf die genaue Einhaltung einer vorbestimmten Lage ankommt. Sodann werden die Spannpratze 50 und Spannarme 60 nach innen geschwenkt und die Spannpratze 50 wird von ihrem Schwenkantrieb 56 derart belastet, daß sie mit ihren Spannflächen 58 auf die beiden zweiten Angriffsflächen 28 je eine Kraft F ausübt, wobei diese Kräfte F bei den Ausführungsformen gemäß Fig.1 bis 5 und gemäß Fig.7 konvergieren, gemäß Fig.6 jedoch divergieren. In beiden Fällen haben diese Kräfte F je eine zur Bezugsebene C normale, bei der dargestellten Anordnung waagerechte Komponente, die in bezug auf die Drehachse D den Hebelarm E aufweist.

Falls das Werkstück 10 nicht zufällig von vorneherein so in die Spannvorrichtung 30 eingelegt worden ist, daß seine Mittelebene genau mit der Bezugsebene C übereinstimmt, sind die waagerechten Komponenten der Kräfte F zunächst nicht miteinander im Gleichgewicht. Somit entsteht ein resultierendes Moment, durch welches das Werkstück 10 geringfügig um die Drehachse D gedreht wird, bis sich ein Momentengleichgewicht dadurch einstellt, daß das Werkstück bezüglich der Bezugsebene C zentriert ist. Daraufhin werden die beiden Spannarme 60 gemäß Fig.1 bis 3 bzw. der gemäß Fig.7 vorgesehene einzige Spannarm 60 von ihrem Antrieb 64 nach unten gezogen, so daß das Werkstück 10 auch im Bereich der Drehachse D sicher festgespannt wird.

## Patentansprüche

1. Verfahren zum Vorbereiten eines rohen Werkstücks, insbesondere eines gegossenen Bremssattels, für eine Weiterbearbeitung, wobei
- am Werkstück (10) eine Basisebene (B) und eine dazu normale Bezugsebene (C) festgelegt und Auflageflächen (20, 22) sowie Angriffsflächen (26, 28) ausgebildet werden und
- das Werkstück (10) in eine Spannvorrichtung (30) eingespannt wird, indem es mit seinen Auflageflächen (20, 22) auf je eine Stützfläche (40, 42) der Spannvorrichtung aufgelegt und eine Spannpratze (50) mit zur Bezugsebene (C) konvergierenden Spannflächen (58) gegen ein Paar entsprechend konvergierende Angriffsflächen (28) des Werkstücks (10) gedrückt wird,
dadurch gekennzeichnet, daß
- eine erste Auflagefläche (20) des Werkstücks (10) von einem Auflageelement gebildet wird, das mit einem eine erste Stützfläche (40) der Spannvorrichtung (30) bildenden Stützelement zu einem Drehgelenk mit zur Basisebene (B) normaler, in der Bezugsebene (C) liegender Drehachse (D) zusammengesteckt wird,
- von den übrigen Auflageflächen (22) des Werkstücks (10) und den zugehörigen Stützflächen (42) der Spannvorrichtung (30) nur Stützkräfte (H) parallel zur Drehachse (D) übertragen werden,
und
- die konvergierenden Spannflächen (58) der Spannpratze (50) sowie die zugehörigen Angriffsflächen (28) des Werkstücks (10) in einem Abstand (E) von der Drehachse (D) angeordnet werden, so daß sich das Werkstück beim Spannen der Spannpratze (50) um die Drehachse (D) in eine Mittellage dreht, in der die Momente der von den konvergierenden Spannflächen (58) ausgeübten Spannkräfte (F) miteinander im Gleichgewicht stehen.

2. Verfahren nach Anspruch 1,
dadurch gekennzeichnet, daß zusätzlich zu den von den konvergierenden Spannflächen (58) ausgeübten Spannkräften (F) an mindestens einer der Drehachse (D) benachbarten Stelle eine zur Drehachse (D) parallele zusätzliche Spannkraft (G) auf das Werkstück (10) ausgeübt wird, um dieses in der Mittellage festzuhalten.

3. Verfahren nach Anspruch 2,
dadurch gekennzeichnet, daß die zusätzliche Spannkraft (G) gegenüber den von den konvergierenden Spannflächen (58) ausgeübten Spannkräften (F) verzögert aufgebracht wird.

4. Verfahren nach einem der Ansprüche 1 bis 3,
dadurch gekennzeichnet, daß das Werkstück (10) mit einer die Drehachse (D) definierenden kegelförmigen Vertiefung als erster Auflagefläche (20) hergestellt wird.

5. Verfahren nach Anspruch 4,
dadurch gekennzeichnet, daß die übrigen Auflageflächen (22) des Werkstücks (10) als zur Drehachse (D) normale ebene Flächen hergestellt werden.

6. Spannvorrichtung zum Durchführen des Verfahrens nach Anspruch
1 mit
- einem Unterteil (32), an dem Stützflächen (40, 42) zum Auflegen eines Werkstücks (10) angeordnet sind, und
- einer Spannpratze (50), die konvergierende Spannflächen (58) zum Niederdrücken des auf den Stützflächen (40, 42) liegenden Werkstücks (10) aufweist,
dadurch gekennzeichnet, daß
- eine erste Stützfläche (40) von einem rotationssymmetrischen Stützelement gebildet ist, das eine Drehachse (D) definiert und gemeinsam mit einem Auflageelement am Werkstück (10) zu einem Drehgelenk zusammensteckbar ist, um welches das Werkstück (10) auf dem Unterteil (32) drehbar ist,
- die übrigen Stützflächen (42) nur zum Übertragen von zur Drehachse (D) parallelen Stützkräften (H) ausgebildet sind und
- die konvergierenden Spannflächen (58) der Spannpratze (50) in einem Abstand (E) von der Drehachse (D) angeordnet sind.

7. Spannvorrichtung nach Anspruch 6,
dadurch gekennzeichent, daß die erste Stützfläche (40) kugelförmig ist.

8. Spannvorrichtung nach Anspruch 6 oder 7,
dadurch gekennzeichnet, daß die Stützflächen (40, 42) an je einem von insgesamt drei auswechselbar am Unterteil (32) befestigten Einsätzen (44) ausgebildet sind.

9. Spannvorrichtung nach Anspruch 8,
dadurch gekennzeichnet, daß mindestens einer der Einsätze (44) in bezug auf das Unterteil (32) in einer zur Drehachse (D) parallelen Richtung einstellbar ist.

10. Spannvorrichtung nach einem der Ansprüche 6 bis 9,
dadurch gekennzeichnet daß, zusätzlich zu der mit den konvergierenden Spannflächen (58) ausgestatteten Spannpratze (50) mindestens ein Spannarm (60) vorgesehen ist, mit dem sich an mindestens einer der Drehachse (D) benachbarten Stelle eine zu dieser parallele zusätzliche Spannkraft (G) auf das Werkstück (10) ausüben läßt.

## Claims

1. A method for preparing a workpiece blank, in particular a cast brake caliper, for further machining, where
- a base plane (B) and an orthogonal reference plane (C) are defined it the workpiece (10) and seat surfaces (20, 22) as well as application surfaces (26, 28) are formed, and
- the workpiece (10) is clamped in a clamping apparatus (30) by placing its seat surfaces (20, 22) on to one support surface (40, 42) each of the clamping apparatus and by pressing a clamping jaw (50) with clamping surfaces (58) converging with respect to the reference plane (C) against a pair of correspondingly converging application surfaces (28) of the workpiece (10),
characterized in that
- a first seat surface (20) of the workpiece (10) is formed by a seat element which is coupled with a support element which forms a first support surface (40) of the clamping apparatus (30) to form a revolute joint with an axis of rotation (D) which is orthogonal to the base plane (B) and which lies within the reference plane (C),
- the remaining seat surfaces (22) of the workpiece (10) and the associated support surfaces (42) of the clamping apparatus (30) transfer only support forces (H) parallel to the axis of rotation (D), and
- the converging clamping surfaces (58) of the clamping jaw (50) as well as the associated application surfaces (28) of the workpiece (10) are arranged at a distance (E) from the axis of rotation (D) in such a manner that, upon tightening of the clamping jaw (50), the workpiece rotates about the axis of rotation (D) to a central position in which the moments of the clamping forces (F) exerted by the converging clamping surfaces (58) are in an equilibrium.

2. A method according to Claim 1,
characterized in that in addition to the clamping forces (F) exerted by the converging clamping surfaces (58) an additional clamping force (G) parallel to the axis of rotation (D) is applied to the workpiece (10) at at least one point adjacent to the axis of rotation (D) for securing said workpiece in the centre position.

3. A method according to Claim 2,
characterized in that the additional clamping force (G) is applied with a delay with respect to the clamping forces (F) exerted by the converging clamping surfaces (58).

4. A method according to one of Claims 1 to 3,
characterized in that the workpiece (10) is manufactured with a cone-shaped recess which defines the axis of rotation (D) as the first seat surface (20).

5. A method according to Claim 4,
characterized in that the remaining seat surfaces (22) of the workpiece (10) are formed as plane surfaces orthogonal to the axis of rotation (D).

6. A clamping apparatus for carrying out the method according to Claim 1, comprising
- a base (32) at which support surfaces (40, 42) for accommodating a workpiece (10) are arranged, and
- a clamping jaw (50) with converging clamping surfaces (58) for pressing down the workpiece (10) resting on the support surfaces (40, 42),
characterized in that
- a first support surface (40) is formed by a rotation-symmetrical support element which defines an axis of rotation (D) and which can be coupled together with a seat element at the workpiece (10) to form a revolute joint about which the workpiece (10) is rotatable on the base (32),
- the remaining support surfaces (42) are adapted to transfer only support forces (H) parallel to the axis of rotation (D), and
- the converging clamping surfaces (58) of the clamping jaw (50) are arranged at a distance (E) from the axis of rotation (D).

7. A clamping apparatus according to Claim 6,
characterized in that the first support surface (40) is spherical.

8. A clamping apparatus according to Claim 6 or 7,
characterized in that the support surfaces (40, 42) are formed at one each of a total of three inserts (44) which are fastened replaceably at the base (32).

9. A clamping apparatus according to Claim 8,
characterized in that at least one of the inserts (44) is adjustable relative to the base (32) in a direction parallel to the axis of rotation (D).

10. A clamping apparatus according to one of Claims 6 to 9,
characterized in that in addition to the clamping jaw (50) comprising the converging clamping surfaces (58) at least one clamping arm (60) is provided by means of which an additional clamping force (G) can be applied to the workpiece (10) parallel to the axis of rotation (D) at at least one point adjacent to same.

## Revendications

1. Procédé pour préparer une pièce brute à usiner, en particulier un étrier de frein coulé, pour un usinage ultérieur, dans lequel
- un plan de base (B) et un plan de référence (C) perpendiculaire à celui-ci sont déterminés sur la pièce à usiner (10) et des surfaces d'appui (20, 22) ainsi que de surfaces de saisie (26, 28) sont formées sur la pièce à usiner (10) et
- la pièce à usiner (10) est serrée dans un dispositif de serrage (30) en appliquant chacune de ses surfaces d'appui (20, 22) sur une surface de support (40, 42) respective du dispositif de serrage et en pressant une griffe de serrage (50) comprenant des surfaces de serrage (58) convergeant vers le plan de référence (C) contre une paire de surfaces de saisie (28) convergeant de façon correspondante de la pièce à usiner (10),
caractérisé en ce que
- une première surface d'appui (20) de la pièce à usiner (10) est formée par un élément d'appui qui coopère par introduction avec un élément de support formant une première surface de support (40) du dispositif de serrage (30) en formant une articulation tournante dont l'axe de rotation (D) est normal au plan de base (B) et se trouve dans le plan de référence (C),
- seules des forces de support (H) parallèles à l'axe de rotation (D) sont transmises par les autres surfaces d'appui (22) de la pièce à usiner (10) et les surfaces de support (42) associées du dispositif de serrage (30), et
- les surfaces de serrage (58) convergeantes de la griffe de serrage (50) ainsi que les surfaces de saisie (28) associées de la pièce à usiner (10) sont disposées à une distance d'espacement (E) de l'axe de rotation (D) de telle façon que la pièce à usiner tourne, lors du serrage de la griffe de serrage (50), autour de l'axe de rotation (D) dans une position médiane dans laquelle les moments des forces de serrage (F) exercées par les surfaces de serrage (58) convergeantes sont en équilibre entre eux.

2. Procédé selon la revendication 1,
caractérisé en ce qu'une force de serrage (G) supplémentaire parallèle à l'axe (D) est exercée sur la pièce à usiner (10), en plus des forces de serrage (F) exercées par les surfaces de serrage (58) convergeantes, en au moins un emplacement voisin de l'axe de rotation (D), pour maintenir la pièce à usiner (10) dans la position médiane.

3. Procédé selon la revendication 2,
caractérisé en ce que la force de serrage (G) supplémentaire est appliquée avec un retard par rapport aux forces de serrage (F) exercées par les surfaces de serrage (58) convergeantes.

4. Procédé selon l'une quelconque des revendications 1 à 3,
caractérisé en ce que la pièce à usiner (10) est fabriquée avec un creux conique définissant l'axe de rotation (D) et formant la première surface d'appui (20).

5. Procédé selon la revendication 4,
caractérisé en ce que les autres surfaces d'appui (22) de la pièce à usiner (10) sont fabriquées sous forme de surfaces planes normales à l'axe de rotation (D).

6. Dispositif de serrage pour mettre en oeuvre le procédé selon la revendication 1 comprenant
- une partie inférieure (32) sur laquelle sont disposées des surfaces de support (40, 42) pour y poser une pièce à usiner (10), et
- une griffe de serrage (50) qui présente des surfaces de serrage (58) convergeantes pour peser sur la pièce à usiner (10) posée sur les surfaces de support (40, 42),
caractérisé en ce que
- une première surface de support (40) est formée par un élément de support à symétrie de rotation qui définit un axe de rotation (D) et peut coopérer par introduction avec un élément d'appui sur la pièce à usiner (10) en formant une articulation tournante autour de laquelle la pièce à usiner (10) peut tourner sur la partie inférieure (32),
- les autres surfaces de support (42) sont formées pour ne transmettre que des forces de support (H) parallèles à l'axe de rotation (D) et
- les surfaces de serrage (58) convergeantes de la griffe de serrage (50) sont disposées à une distance d'espacement (E) de l'axe de rotation (D).

7. Dispositif de serrage selon la revendication 6,
caractérisé en ce que la première surface de support (40) est de forme sphérique.

8. Dispositif de serrage selon la revendication 6 ou 7,
caractérisé en ce que les surfaces de support (40, 42) sont formées chacune sur l'une d'au total trois pièces (44) fixées de façon remplaçable à la partie inférieure (32).

9. Dispositif de serrage selon la revendication 8,
caractérisé en ce qu'au moins une des pièces (44) peut être réglée par rapport à la partie inférieure (32) dans une direction parallèle à l'axe de rotation (D).

10. Dispositif de serrage selon l'une quelconque des revendications 6 à 9,
caractérisé en ce qu'un bras de serrage (60) est prévu en plus de la griffe de serrage (50) équipée des surfaces de serrage (58) convergeantes, avec lequel une force de serrage (G) supplémentaire parallèle à l'axe de rotation (D) peut être exercée sur la pièce à usiner (10) en au moins un emplacement voisin de l'axe de rotation (D).
